# EUROPÄISCHE PATENTSCHRIFT

(11) **EP 3 847 516 B1**
(45) Veröffentlichungstag und Bekanntmachung des Hinweises auf die Patenterteilung: **15.11.2023**
(21) Anmeldenummer: 19769033.2
(22) Anmeldetag: 27.08.2019
(51) Int. Cl.: G05B 19/418

(54) **IDENTIFIZIEREN VON STEUERGERÄTEN IN AUTOMATISIERUNGSSYSTEMEN**
CONTROL DEVICE IDENTIFICATION IN AN AUTOMATED SYSTEM
IDENTIFICATION DES CONTRÔLEURS DANS UN SYSTÈME D'AUTOMATISATION

(30) Priorität: 03.09.2018 DE 102018214930
(43) Veröffentlichungstag der Anmeldung: 14.07.2021
(73) Patentinhaber: Siemens Schweiz AG, 8047 Zürich (CH)
(72) Erfinder: GOLLACKNER, Thomas, 6315 Oberägeri (CH); KYBURZ, Beat, 6030 Ebikon (CH); MEIER, Herbert, 6340 Baar (CH)
(74) Vertreter: Siemens Patent Attorneys
(86) Internationale Anmeldenummer: PCT/EP2019/072861
(87) Internationale Veröffentlichungsnummer: WO 2020/048825

(56) Entgegenhaltungen:
- EP-A1- 1 249 747
- DE-A1-102014 001 462
- DE-A1-102014 103 415
- DE-A1-102015 116 825
- DE-A1-102016 216 921

## Beschreibung

Die vorliegende Erfindung betrifft ein Verfahren zum Ermitteln eines von mehreren Steuergeräten in einem Datennetzwerk eines Automatisierungssystems. Darüber hinaus betrifft die vorliegende Erfindung ein Automatisierungssystem mit mehreren Steuergeräten, einem Endgerät, einem Datennetzwerk, mit dem die Steuergeräte und das Endgerät verbunden sind, einem Feldgerät und einem Feldbus, mit dem das Feldgerät mit einem der Steuergeräte verbunden ist.

Die Inbetriebnahme, aber auch Servicetätigkeiten allgemein bei (Gebäude-)Automatisierungssystemen zum Beispiel für Heizungs-, Lüftungs- oder Klimafunktionalität (HLK) erfordert eine eindeutige Identifikation der Regel- und Steuergeräte beziehungsweise Controller (nachfolgend als Steuergeräte zusammengefasst) zum Beispiel in einem Inbetriebnahme-Tool eines (Raum-) Automatisierungssystems, damit beispielsweise die notwendigen Inbetriebnahmetests mit dem korrekten Steuergerät durchgeführt werden können. Unter einem Inbetriebnahme-Tool versteht man ein Gerät beziehungsweise eine Applikation, mit deren/dessen Hilfe eine Inbetriebnahme durchgeführt werden kann. Ein solches Inbetriebnahme-Tool kann beispielsweise ein speziell dafür konzipiertes Endgerät, aber auch ein Smartphone, ein Tablet, ein PC und dergleichen, sowie eine Software-Applikation in einem Servicebeziehungsweise Inbetriebnahmeumfeld sein.

Unter Inbetriebnahme wird insbesondere das Einstellen eines Systems, einer Anlage oder Maschine verstanden. Das heißt, insbesondere Maßnahmen und Handlungen (zum Beispiel Konfiguration, Parametrierung, Optimierung und Test), die notwendig sind, um eine Maschine oder Anlage betriebsbereit beziehungsweise einsatzbereit zu machen. Eine Inbetriebnahme umfasst Maßnahmen und Tätigkeiten, die nach der Montage der Hardware insbesondere der Feldgeräte und Controller beziehungsweise nach der Installation der Software zur Einrichtung und Prüfung des Produkts/Systems durchgeführt werden.

Die Steuergeräte beziehungsweise Controller für Raum-, Gebäude- oder andere Automatisationssysteme sind häufig an schlecht zugänglichen Standorten installiert. Beispielsweise werden sie in Zwischendecken, in Fensterpanelen oder in einem Zwischenboden installiert und sind von außen nicht oder kaum sichtbar beziehungsweise zugänglich. An ein Steuergerät sind in der Regel eines oder mehrere Feldgeräte angeschlossen, die jeweilige Funktionalitäten bereitstellen.

Unter einem Feldgerät werden insbesondere Sensoren, und Aktoren und Bediengeräte verstanden. Zustände der Feldgeräte werden im Regel- und Steuergerät (zum Beispiel Controller) durch entsprechende Datensätze beziehungsweise Datenpunkte repräsentiert. Mit Vorteil sind die Aktoren mit zusätzlichen Sensoren ausgestattet, um den Zustand beziehungsweise eine Rückmeldung vom Prozess im Controller und in den Handlungsanweisungen zu bestimmen und eine Diagnose bei einem Fehlverhalten zu unterstützen.

Die Verbindung zwischen einem Inbetriebnahme-Tool beziehungsweise Service-Tool (nachfolgend als Endgerät bezeichnet) und dem Steuergerät erfolgt in der Regel über ein Gebäudenetzwerk beziehungsweise Datennetzwerk (Back Bone), das vorzugsweise auf dem Internetprotokoll (IP) basiert. In dieses Datennetzwerk sind meist mehrere Steuergeräte integriert.

Bei größeren Projekten sind häufig sehr viele Raum-Steuergeräte beziehungsweise Raum-Controller installiert. Diese haben gerade während der Installationsphase aus Sicht des Service-Technikers noch keine aussagekräftigen elektronischen Identifikatoren, sodass die Steuergeräte über das (IP-) Gebäudenetzwerk nur schlecht einem Raum zugeordnet werden können. Gerade für wenig ausgebildete Service-Techniker wird somit die Zuordnung von einem Raum-Steuergerät in dem Service- beziehungsweise Inbetriebnahme-Tool schwierig. Daher werden bei Inbetriebnahme- beziehungsweise Servicemaßnahmen immer wieder falsche Raum-Steuergeräte gewählt.

Darüber hinaus besteht die Problematik, dass Gebäudepläne mit Informationen zum genauen Installationsstandort der Raum-Steuergeräte sowie der Peripheriegeräte im Raum für den Service-Techniker meist nicht direkt verfügbar sind. Vielmehr muss er entsprechende Pläne vor seinem Einsatz beim jeweiligen Projekt zum Beispiel in einem Bauordner häufig erst ausfindig machen.

Es sind Raum-Controller bekannt, die einen sogenannten "Service-Pin" besitzen. Durch Betätigen dieses Service-Pins auf dem Raum-Controller kann in einem Inbetriebnahme-Tool automatisch eine Verbindung zu einem Knoten eines BACnet-Netzwerks (Building Automation and Controll Netzwerks) hergestellt werden. Durch den häufig schlecht zugänglichen Montageort des Raum-Controllers ist jedoch das Bestätigen dieses Service-Pins zur Identifikation häufig zeitaufwendig. Beispielsweise ist ein Panel zu demontieren oder eine Decke zu öffnen.

Das Inbetriebnahme-Tool kann beispielsweise ein sogenanntes "Wink-Kommando" via IP BACnet-Netzwerk an einen Raum-Controller senden. Beim Empfang dieses Wink-Kommandos kann sich der Raum-Controller melden, zum Beispiel durch Blinken einer LED oder einen akustischen Signalton. Unter Umständen kann jedoch durch den schlecht zugänglichen Montageort des Raum-Controllers dieses Blinken beziehungsweise dieser Signalton durch den Service-Techniker schlecht eingesehen beziehungsweise wahrgenommen werden.

Das Inbetriebnahme-Tool kann eine Verbindung zum Raum-Controller mittels eindeutiger Controller-Seriennummer aufbauen. Die Seriennummer muss aber bekannt sein und in dem Inbetriebnahme-Tool eingegeben werden können. Die am Controller sichtbare Seriennummer kann jedoch wieder oft wegen der versteckten Montage nicht zur Identifikation herangezogen werden.

Gegebenenfalls kann das Inbetriebnahme-Tool auch vor Ort physikalisch (zum Beispiel mit einem USB-Kabel) direkt mit dem Raum-Controller verbunden werden. Damit ist der Raum-Controller eindeutig identifizierbar. Auch dieses Verfahren ist wiederum vom Montageort und der Zugänglichkeit des Raum-Controllers abhängig.

Alternativ kann das Inbetriebnahme-Tool unter Umständen indirekt via ein Raum- beziehungsweise ein Feldgerät (Peripheriegerät) physikalisch mit dem Raum-Controller verbunden werden. Das Feldgerät ist in der Regel gut zugänglich und eindeutig dem Raum-Controller zugeordnet. Das Feldgerät muss jedoch für diese Funktion speziell eingerichtet sein und bei Feldgeräten von Drittanbietern ist dieses Verfahren häufig nicht umsetzbar.

Aus der Druckschrift DE 2016 216 921 A1 ist ein Verfahren und eine Anordnung zur Inbetriebnahme von Regel- und Steuergeräten für eine Gebäudeautomatisierung bekannt. Die Regel- und Steuergeräte dienen zum Regeln beziehungsweise Steuern von Feldgeräten für die Gebäudeautomatisierung. Zwischen dem Regel- und Steuergerät und einem mobilen Kommunikationsendgerät eines Benutzers wird eine Kommunikationsverbindung erstellt. Das mobile Kommunikationsendgerät ist dazu eingerichtet, über die Kommunikationsverbindung Datenpunkte des Regel- und Steuergeräts abzufragen und auf ihren jeweiligen Zustand zu überprüfen. Ein Datenpunkt repräsentiert den Zustand eines Parameters eines Feldgeräts. Das mobile Kommunikationsendgerät ist weiter dazu ausgebildet, den Zustand der Datenpunkte über eine weitere Kommunikationsverbindung an eine zentrale Stelle zu übertragen.

Aus der Druckschrift DE 10 2014 103415 A1 ist ein ähnliches Verfahren und eine ähnliche Anordnung bekannt.

Die Aufgabe der vorliegenden Erfindung besteht darin, die Handhabung von Steuergeräten eines Automatisierungssystems zu vereinfachen.

Erfindungsgemäß wird diese Aufgabe gelöst durch ein Verfahren und ein Automatisierungssystem nach einem der unabhängigen Ansprüche. Vorteilhafte Weiterbildungen der Erfindung ergeben sich aus den Unteransprüchen.

Erfindungsgemäß wird demnach bereitgestellt ein Verfahren zum Ermitteln eines von mehreren Steuergeräten in einem Datennetzwerk eines Automatisierungssystems durch
- Auslösen einer Aktion eines Feldgeräts zum Erzeugen eines Ansteuersignals durch eine Benutzerinteraktion (z.B. Auslösen durch einen Taster (bzw. Tastenkombination) am Feldgerät durch z.B. den Service Techniker, was zum Erzeugen eines Ansteuersignals am Feldbus führt),
- Übertragen des Ansteuersignals an das eine der mehreren Steuergeräte über einen Feldbus entsprechend einem Feldbusprotokoll,
- Erzeugen einer Identifikationsmeldung entsprechend einem von dem Feldbusprotokoll verschiedenen Netzwerkprotokoll durch das eine der mehreren Steuergeräte auf der Basis des Ansteuersignals, wobei
- die Identifikationsmeldung eine Information über die Identität des einen der mehreren Steuergeräte beinhaltet,
- Übertragen der Identifikationsmeldung über das Datennetzwerk zu einem Endgerät und
- Identifizieren des einen der mehreren Steuergeräte durch das Endgerät anhand der Identifikationsmeldung.

Es liegt also ein Automatisierungssystem vor, das mehrere Steuergeräte (stellvertretend für Steuer- und/oder Regelgeräte) aufweist. Die mehreren Steuergeräte sind über ein Datennetz signal- beziehungsweise datentechnisch vernetzt. Für die Inbetriebnahme beziehungsweise für Servicetätigkeiten ist es häufig notwendig ein bestimmtes der mehreren Steuergeräte eindeutig zu identifizieren. Dazu wird hier eine Identifikationsmeldung des Steuergeräts indirekt über ein Feldgerät ausgelöst. Speziell kann das Feldgerät manuell betätigt werden und durch diese manuelle Betätigung erzeugt das Feldgerät das entsprechende Ansteuersignal. Dieses Ansteuersignal wird über mindestens einen Feldbus an das jeweilige (zugeordnete) Steuergerät übertragen. Diese Signalübertragung erfolgt entsprechend einem Feldbusprotokoll. Gegebenenfalls wird ein feldgerätespezifisches Ansteuersignal in Übereinstimmung mit dem Feldbusprotokoll an das jeweilige Steuergerät übertragen. Das Steuergerät empfängt dieses Ansteuersignal und erzeugt daraus eine Identifikationsmeldung. Diese Identifikationsmeldung wird entsprechend einem Netzwerkprotokoll erstellt, das verschieden ist von dem Feldbusprotokoll. Es findet also in dem Steuergerät eine Protokollumsetzung statt. Dabei besitzt die Identifikationsmeldung eine Information über die Identität des die Identifikationsmeldung erzeugenden Steuergeräts. Bei dieser Information kann es sich um einen eindeutigen Identifikator in elektrischer Form handeln. Die Identifikationsmeldung wird sodann über das Datennetzwerk zu einem Endgerät, zum Beispiel Inbetriebnahme-Tool, übertragen. Diese Übertragung der Identifikationsmeldung ist also unabhängig von der Spezifikation des Feldbusses. Schließlich kann das Endgerät das spezifische Steuergerät, das von dem Feldgerät angesteuert wurde, anhand der Identifikationsmeldung beziehungsweise der darin enthaltenen Identitätsinformation identifizieren. In vorteilhafter Weise wird also die Identifikation des Steuergeräts durch das Feldgerät veranlasst beziehungsweise ausgelöst. Daher ist es nicht notwendig, das Steuergerät direkt manuell erreichen oder zumindest sehen zu können. Die Inbetriebnahme des Steuergeräts beziehungsweise des Automatisierungssystems sowie deren Wartung können dadurch deutlich vereinfacht werden.

In einer speziellen Ausführungsform handelt es sich bei dem Feldbus um einen KNX-Bus, einen Modbus, einen EIB-Bus, einen EHS-Bus oder einen LON-Bus oder der Feldbus ist mit einem drahtlosen Netzwerk (z.B. ZigBee) realisiert ist, und das Feldbusprotokoll ist entsprechend spezifiziert. Derartige Bus-Systeme sind weit verbreitet und können günstigerweise für die Gebäudeinstallation verwendet werden. Daher ergeben sich entsprechende Inbetriebnahme- beziehungsweise Servicevorteile spezielle bei Gebäudeinstallationssystemen.

Ferner kann vorgesehen sein, dass das Datennetzwerk ein auf dem Internet-Protokoll (IP) basierendes Netzwerk ist. Dieses Protokoll stellt einen weit verbreiteten Standard dar, der von zahlreichen Geräten genutzt werden kann. Daher ist eine hohe Kompatibilität mit zahlreichen Endgeräten gegeben.

Darüber hinaus kann in einem Ausführungsbeispiel vorgesehen sein, dass die Identifikationsmeldung eine Broadcast-Meldung ist, die an alle Teilnehmer des Datennetzwerks gesendet wird. Die Identifikationsmeldung wird somit im gesamten Datennetzwerk verbreitet und ist jedem Endgerät prinzipiell zugänglich. Durch eine derartige Broadcast-Meldung kann somit sichergestellt werden, dass die Identifikationsinformation auch tatsächlich das in das Datennetzwerk integrierte Endgerät erreicht.

Speziell kann vorgesehen sein, dass das Endgerät drahtlos mit dem Datennetzwerk verbunden wird. Für die Inbetriebnahme beziehungsweise den Service an dem Automatisierungssystem kann so beispielsweise ein WLAN-kompatibles oder Bluetoothkompatibles Endgerät verwendet werden. Auf diese Weise ist beispielsweise der Service-Techniker noch wesentlich flexibler bei der Inbetriebnahme, bei dem Service oder aber auch nur bei der Identifikation des jeweiligen Steuergeräts.

In einer weiteren Ausführungsform wird, wie oben bereits mehrfach angedeutet wurde, das Verfahren im Rahmen einer Inbetriebnahme oder einer Servicemaßnahme des Feldgeräts, des einen der mehreren Steuergeräte oder des gesamten Automatisierungssystems durchgeführt. Gegebenenfalls ist von der Inbetriebnahme beziehungsweise dem Service auch nur ein Teil des Automatisierungssystems mit mehreren Geräten betroffen. Es wird also bei der Inbetriebnahme oder bei der Servicemaßnahme ein bestimmtes Steuergerät identifiziert. Dieses Ermitteln beziehungsweise Identifizieren des bestimmten Steuergeräts kann mit dem geschilderten Verfahren erfolgen. Nach diesem Identifizieren kann eine korrekte Inbetriebnahmefunktion oder Servicefunktion in oder an dem Steuergerät beziehungsweise in dessen Peripherie durchgeführt werden.

Gemäß einer weiteren Ausgestaltung kann das Identifizieren des einen der mehreren Steuergeräte ein optisches Kenntlichmachen eines bildlichen Repräsentanten des einen der mehreren Steuergeräte auf dem Endgerät umfassen. Beispielsweise werden auf einem Bildschirm des Endgeräts mehrere Steuergeräte und ggf. Feldgeräte bildlich dargestellt. Entsprechend dem Ergebnis des Identifizierens wird nun die bildliche Darstellung beziehungsweise der bildliche Repräsentant desjenigen Steuergeräts optisch kenntlich gemacht (zum Beispiel farblich hervorgehoben), der dem identifizierten Steuergerät entspricht. Somit kann der Service-Techniker das identifizierte Steuergerät sofort erfassen und erhält zahlreiche Informationen, die in Zusammenhang mit dem Feldgerät stehen (z.B weitere Messgrößen / Diagnoseinformationen). Somit erhält der Benutzer am Endgerät beispielsweise umfassende Informationen für seine Aufgaben (z.B. kann damit Fehler eingrenzen).

Darüber hinaus kann vorgesehen sein, dass mit dem Ansteuersignal auch Messdaten oder Zustandsdaten von dem Endgerät an das eine der mehreren Steuergeräte übertragen werden. Es wird also mit dem Ansteuersignal nicht nur das Erzeugen der Identifikationsmeldung in dem Steuergerät initiiert, sondern das Ansteuersignal erhält die zusätzliche Funktionalität, dass spezifische Daten des Endgeräts, wie etwa die aktuelle Temperatur im Falle eines Temperaturmessfühlers im Feldgerät, an das Steuergerät übertragen wird. Gegebenenfalls kann mit dem Ansteuersignal auch ein Schaltzustand oder dergleichen an das Steuergerät übermittelt werden.

Erfindungsgemäß wird obige Aufgabe auch gelöst durch ein Automatisierungssystem mit
- mehreren Steuergeräten,
- einem Endgerät,
- einem Datennetzwerk, mit dem die mehreren Steuergeräte und das Endgerät verbunden sind,
- einem Feldgerät (ggf. von mehreren Feldgeräten), mit dem ein Ansteuersignal durch Auslösen mittels einer Benutzerinteraktion erzeugbar ist,
- (mindestens) einem Feldbus, mit dem das Ansteuersignal an eines der mehreren Steuergeräte entsprechend einem Feldbusprotokoll übertragbar ist, wobei
- durch das eine der mehreren Steuergeräte eine Identifikationsmeldung entsprechend einem von dem Feldbusprotokoll verschiedenen Netzwerkprotokoll auf der Basis des Ansteuersignals erzeugbar ist,
- die Identifikationsmeldung eine Information über die Identität des einen der mehreren Steuergeräte beinhaltet,
- die Identifikationsmeldung von dem einen der mehreren Steuergeräte über das Datennetzwerk zu dem Endgerät übertragbar ist und
- durch das Endgerät das eine der mehreren Steuergeräte anhand der Identifikationsmeldung identifizierbar ist.

Die oben im Zusammenhang mit dem erfindungsgemäßen Verfahren geschilderten Ausgestaltungen, Variationsmöglichkeiten und Vorteile gelten sinngemäß auch für das erfindungsgemäße Automatisierungssystem.

In einer speziellen Ausgestaltungsform des erfindungsgemäßen Automatisierungssystems ist vorgesehen, dass das eine der mehreren Steuergeräte das einzige Steuergerät ist, mit dem das Feldgerät verbunden ist. Es ist damit sichergestellt, dass eine eindeutige Zuordnung von Feldgerät und Steuergerät gegeben ist. Auf diese Weise kann auch gewährleistet werden, dass mit dem Feldgerät nur das ganz bestimmte Steuergerät zum Identifizieren angesprochen wird.

In einer weiteren Ausgestaltung des Automatisierungssystems besitzt das Feldgerät eine Servicetaste oder eine Programmiertaste oder es kann eine Tastenkombination oder Tastensequenz mit entsprechender Logik vorgesehen sein für die Benutzerinteraktion, mit der das Auslösen des Ansteuersignals manuell ausführbar ist. Unter den jeweiligen Tasten sind auch Schalter oder Touchfelder zu verstehen, mit denen die Eingabe durch eine Betätigung beziehungsweise Berührung erfolgt. Auf diese Weise kann eine sichere Auslösung des Ansteuersignals gewährleistet werden.

Bei einer alternativen Ausgestaltung ist vorgesehen, dass das Feldgerät eine Spracheingabeeinrichtung für die Benutzerinteraktion besitzt, mit der das Auslösen des Ansteuersignals verbal ausführbar ist. Dies hat den Vorteil, dass der Service-Techniker beispielsweise nicht unmittelbaren körperlichen Kontakt zu dem Feldgerät herstellen muss. Vielmehr steuert er das Feldgerät durch entsprechende Spracheingabe an, um das Ansteuersignal für das Steuergerät zu erzeugen.

Bei jeweils spezifischer Ausgestaltung des Automatisierungssystems handelt es sich bei dem Endgerät um einen PC, ein Smartphone, ein Tablet oder ein Laptop. Dies schließt natürlich nicht andere Recheneinrichtungen aus. Speziell kann es sich bei dem Endgerät eben auch um ein von dem Hersteller des Automatisierungssystems spezifisch zur Verfügung gestelltes Gerät handeln, welches beispielsweise für eine Inbetriebnahme oder für Servicemaßnahmen optimiert ist.

Die vorliegende Erfindung wird nun anhand der beigefügten Zeichnungen näher erläutert, in denen zeigen:
- FIG 1: ein schematisches Blockdiagramm eines Automatisierungssystems und
- FIG 2: ein prinzipielles Blockdiagramm eines erfindungsgemäßen Verfahrens.

Die nachfolgend geschilderten Ausführungsformen stellen bevorzugte Ausführungsbeispiele der vorliegenden Erfindung dar.

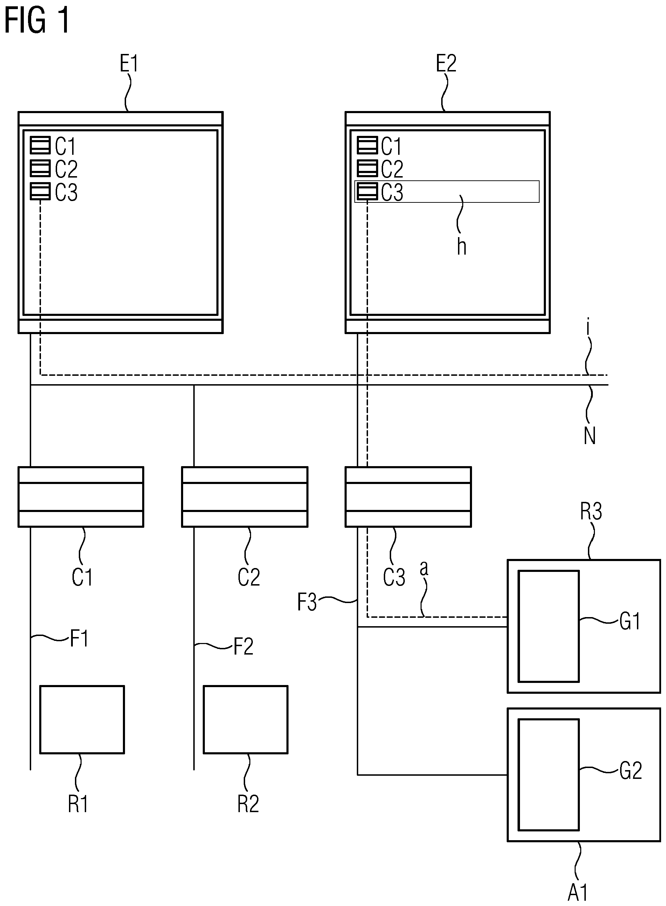

FIG 1 zeigt schematisch ein Automatisierungssystem. Beispielsweise handelt es sich dabei um ein Gebäudeautomatisierungssystem mit Heizungs-, Lüftungs- und/oder Klimafunktionalität. Gegebenenfalls sind auch andere Funktionalitäten wie etwa Beleuchtungsfunktionalitäten integriert. Alternativ kann es sich bei dem Automatisierungssystem jedoch auch um ein Steuerungsbeziehungsweise Regelungssystem einer Industrieanlage handeln.

Ein derartiges Automatisierungssystem besitzt typischerweise mehrere Steuergeräte (auch Controller genannt) mit Steuerungs- beziehungsweise Regelungsfunktionalität. In dem Beispiel von FIG 1 besitzt das Automatisierungssystem die Steuergeräte C1, C2 und C3. Es kann sich bei jedem dieser Steuergeräte C1 bis C3 jeweils um einen sogenannten Raum-Controller handeln, der die Steuerung beziehungsweise Regelung in einem jeweiligen Raum übernimmt. In FIG 1 sind drei Räume R1, R2 und R3 angedeutet. Die Anzahl der drei Steuergeräte C1 bis C3 ist ebenso willkürlich wie die Anzahl der Räume R1 bis R3. Jedenfalls sind sinnvollerweise mindestens zwei Steuergeräte vorhanden, damit zwischen ihnen eine Auswahl getroffen werden kann. Die Zuordnung dieser Steuergeräte zu Räumen ist jedoch auch nur optional. Jedenfalls ist jedes Steuergerät C1 bis C3 an mindestens einen jeweiligen Feldbus F1, F2 und F3 angeschlossen. Ein Steuergerät kann gleichzeitig an mehrere Feldbusse angeschlossen sein (z.B. PL-Link, DALI und Modbus). In FIG 1 ist der Übersicht halber pro Steuergerät nur ein Feldbus eingezeichnet.

Jedes Steuergerät C1 bis C3 steuert über den jeweiligen Feldbus F1 bis F3 oder die jeweiligen Feldbusse (zum Beispiel KNX, Modebus, LON) ein oder mehrere Feldgeräte G1, G2. Beispielsweise enthält der Raum R1 eines oder mehrere Feldgeräte (in FIG 1 nicht eingezeichnet), die über den Feldbus F1 an das Steuergerät C1 angeschlossen sind. In ähnlicher Weise können in dem Raum R2 ein oder mehrere Feldgeräte vorgesehen sein (in FIG 1 nicht eingezeichnet), die über den Feldbus F2 an das Steuergerät C2 angeschlossen sind. Etwas konkreter wurde in dem Raum R3 das Feldgerät G1 eingezeichnet, das über den Feldbus F3 mit dem Steuergerät C3 verbunden ist. Zusätzlich ist in dem vorliegenden Beispiel an das Steuergerät C3 ein weiteres Feldgerät G2 angeschlossen, das zu einer Anlage A1 gehört.

Die Feldgeräte G1 und G2, aber auch diejenigen der anderen Räume beziehungsweise Anlagen sind über den jeweiligen Feldbus F1 bis F3 direkt mit dem zugehörigen Steuergerät C1 bis C3 verbunden. An jedem Feldbus F1 bis F3 ist generell nur ein einziges Steuergerät C1 bis C3 angeschlossen. Deshalb ist die Zuordnung zwischen Feldgerät und Steuergerät jeweils eindeutig.

Die Feldgeräte G1, G2 haben in der Regel einen sogenannten "Service-Pin" oder eine Programmiertaste am Display oder am Bedienpanel. Das jeweilige Feldgerät G1, G2 registriert z.B. eine Betätigung des Service-Pin oder der Programmiertaste. Alternativ kann das Feldgerät auch eine andere Schnittstelle für eine Benutzerinteraktion besitzen. Beispielsweise kann ein Feldgerät auch ein Mikrofon mit entsprechender Sprachverarbeitung aufweisen. Damit sind für das Feldgerät Spracheingaben möglich. Gegebenenfalls kann das Feldgerät auch über eine Fernsteuerung betätigt werden. In diesem Fall würde das betreffende Feldgerät eine Fernsteuerungsschnittstelle besitzen. Beliebige andere Schnittstellen für Benutzerinteraktionen sind denkbar. Im Folgenden werden aber stellvertretend für andere Schnittstellen zur Benutzerinteraktion stets der Service-Pin oder die Programmiertaste genannt. Auch am Endgerät sind Spracheingaben sehr nützlich, weil damit über das Datennetzwerk zum Feldgerät Befehle übertragen werden können.

Beim Betätigen des Service-Pin beziehungsweise der Programmiertaste/Programmtaste erzeugt das jeweilige Feldgerät ein Ansteuersignal, welches zum korrespondierenden Steuergerät C1 bis C3 geschickt wird. Dieses Ansteuersignal vom Feldgerät wird von dem jeweiligen Steuergerät (zum Beispiel Raum-Controller) empfangen. Die Übertragung erfolgt nach dem jeweiligen Feldbusprotokoll.

Jedes Steuergerät C1 bis C3 ist darüber hinaus mit einem gemeinsamen Datennetzwerk N verbunden. Bei diesem Datennetzwerk N kann es sich um ein BACnet-IP-Netzwerk handeln. Dieses Datennetzwerk N ermöglicht beispielsweise eine standardisierte Datenübertragung gemäß dem Internet-Protokoll. An ein derartiges, vorzugsweise standardisiertes Datennetzwerk lässt sich ein Endgerät E1 beziehungsweise E2 mit entsprechender Datenschnittstelle anschließen. In FIG 1 sind zwei Endgeräte E1 und E2 eingezeichnet, um die unterschiedlichen Bildschirmdarstellungen wiedergeben zu können. Typischerweise ist jedoch nur ein Endgerät als Inbetriebnahme-Tool an das Datennetzwerk angeschlossen. Ein solches Endgerät E1 beziehungsweise E2 kann auch als "Tool Client" bezeichnet werden. Mit ihm ist es möglich, die jeweiligen Steuergeräte C1 bis C3 und/oder die Feldgeräte G1, G2, gegebenenfalls aber auch das gesamte Automatisierungssystem, in Betrieb zu nehmen beziehungsweise zu warten. Konkret kann ein solches Endgerät ein BACnet-Engineering-Tool oder eine Mobil-App sein. Das Endgerät E1, E2 ist also gegebenenfalls als Software und/oder Hardware realisiert.

Das jeweilige Steuergerät C1 bis C3 setzt das Ansteuersignal a, das ausgelöst durch eine Benutzerinteraktion von dem Feldgerät G1 stammt, in eine Identifikationsmeldung i um. Diese Identifikationsmeldung i wird beispielsweise in das Datennetz N als "Identifikations-Broadcast-Meldung" ausgesandt. Dies bedeutet, dass jeder Teilnehmer an dem Datennetz diese Identifikationsmeldung i erhält. Es wird also angestoßen durch ein Ansteuersignal a von einem in der Regel leicht zugänglichen Feldgerät G1, G2, das Steuergerät dazu veranlasst, eine Identifikationsmeldung auszusenden. Das Gleiche kann erreicht werden, wenn direkt auf dem Steuergerät C1 bis C3 gegebenenfalls durch einen Service-Pin eine solche Identifikationsmeldung ausgesandt wird.

Das Endgerät E1 beziehungsweise E2 am Datennetzwerk N hat die Fähigkeit, diese Identifikationsmeldung i zu empfangen und aufgrund des Dateninhalts dieser Meldung das Steuergerät im Endgerät E1, E2 automatisch zu identifizieren. Gegebenenfalls wird eine entsprechende Anzeige an dem Endgerät initiiert. Eine solche Anzeige kann beispielsweise eine Hervorhebung h auf dem Bildschirm des Endgeräts E1 beziehungsweise B2 sein, mit der ein Repräsentant "C1", "C2", "C3", et cetera optisch hervorgehoben beziehungsweise kenntlich gemacht wird. Beispielsweise kann die Hervorhebung h durch eine spezifische Farbe oder eine spezifische Helligkeit erfolgen. Auch andere optische Mittel sind denkbar, wie Blinken, Vergrößern und dergleichen.

Beispielweise sieht nun der Service-Techniker auf dem Endgerät das zu einem Raum R1 bis R3 beziehungsweise Endgerät G1, G2 gehörende Steuergerät C1 bis C3 durch die Hervorhebung h selektiert. Damit weiß der Service-Techniker, welches Steuergerät die Identifikationsmeldung ausgesandt hat. Damit kann er direkt mit seinen Installations-/Service-Aufgaben beginnen.

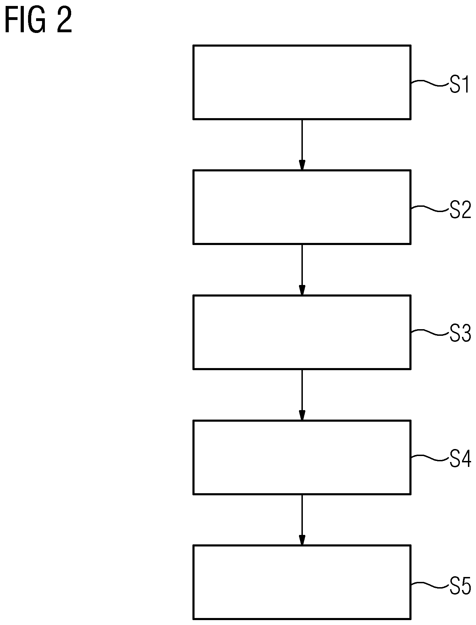

FIG 2 gibt vereinfacht mit Blöcken ein Ausführungsbeispiel eines erfindungsgemäßen Verfahrens wieder. Einzelne Verfahrensschritte sind gegebenenfalls optional.

In einer beispielhaften Situation steht ein Service-Techniker vor der Aufgabe, ein Automatisierungssystem in einem Raum beziehungsweise einem Teil davon in Betrieb zu nehmen beziehungsweise zu warten. Dazu ist er mit seinem Endgerät E2 an ein Datennetzwerk N drahtlos oder drahtgebunden angeschlossen, ebenso wie das in Betrieb zu nehmende beziehungsweise zu wartende Steuergerät C3. Dem Service-Techniker ist in dem einschlägigen Raum R3 ein Feldgerät G1 zugänglich, das mit dem Steuergerät C3 direkt verbunden ist. Zunächst weiß der Service-Techniker nicht, welches der mehreren Steuergeräte C1 bis C3 mit dem Feldgerat G1 verbunden ist. Ihm werden auf dem Bildschirm des Endgeräts (vergleiche FIG 1: Endgerät E1) nur die drei Steuergeräte C1 bis C3 angezeigt. Um nun das Steuergerät zu ermitteln, das mit dem Feldgerät G1 verbunden ist, erfolgt in einem Schritt S1 (vergleiche FIG 2) ein Auslösen (einer Aktion) eines Feldgeräts zum Erzeugen eines Ansteuersignals durch eine Benutzerinteraktion. Der Service-Techniker drückt also beispielsweise den Service-Pin auf dem Feldgerät G1, und das Feldgerät G1 erzeugt daraufhin das Ansteuersignal a. In einem anschließenden Schritt S2 erfolgt ein Übertragen des Ansteuersignals a an das eine der mehreren Steuergeräte C3 über einen Feldbus F3 entsprechend einem Feldbusprotokoll. Dieses Ansteuersignal a wird von dem Steuergerät C3 empfangen.

Anschließend erfolgt in einem Schritt S3 ein Erzeugen einer Identifikationsmeldung entsprechend einem von dem Feldbusprotokoll verschiedenen Netzwerkprotokoll durch das eine der mehreren Steuergeräte C3 auf der Basis des Ansteuersignals a. Es erfolgt also in dem angesprochenen Steuergerät C3 eine Signalumsetzung von einem Protokoll in ein anderes Protokoll. Insbesondere wird das Steuergerät durch das Ansteuersignal dazu veranlasst, Identifikationsinformationen in Form einer Identifikationsmeldung in das Datennetzwerk N, vorzugsweise als Broadcast-Meldung zu stellen. Die Identifikationsmeldung beinhaltet also eine Information über die Identität des einen der mehreren Steuergeräte C3. Gegebenenfalls wird diese Identifikationsmeldung mit weiterer Information über die Identität vom auslösenden Feldgerät angereichert.

Nun wird in einem Schritt S4 die Identifikationsmeldung über das Datennetzwerk N zu einem Endgerät E1 beziehungsweise E2 übertragen (In FIG 1 sind, wie oben bereits erwähnt, zwei Endgeräte E1 und E2 dargestellt, um die unterschiedlichen Bildinhalte vor dem Ermitteln des Steuergeräts und nach dem Ermitteln des Steuergeräts wiederzugeben. In der Praxis wird also üblicherweise nur ein einziges Endgerät E1 oder E2 vorhanden sein.

Schließlich erfolgt gemäß Schritt S5 ein Identifizieren des einen der mehreren Steuergeräte C3 durch das Endgerät anhand der Identifikationsmeldung. Dabei hebt gemäß dem Beispiel von FIG 1 das Endgerät E2 den Repräsentanten "C3" des Steuergeräts C3 durch eine Hervorhebung h (Farbe, Helligkeit et cetera) gegenüber den Repräsentanten "C1" und "C2" der beiden anderen Steuergeräte C1, C2 hervor. Dazu sind in dem Endgerät E2 beispielsweise vorab die Identifikationsnummern zusammen mit den Repräsentanten der jeweiligen Steuergeräte hinterlegt.

Durch die einfache Identifikation des Steuergeräts und gegebenenfalls des damit verbundenen Raums kann der Service-Techniker sehr schnell und sicher den richtigen Controller für den Raum identifizieren beziehungsweise lokalisieren und direkt mit einem Test beginnen. Das Verfahren beziehungsweise Automatisierungssystems kann also auch zur Lokalisierung dienen, sodass auf Baken (engl. Beacons) oder andere Positionsgeräte (zum Beispiel GPS) verzichtet werden kann und es ist nicht erforderlich, weitere Komponenten zur Ortung zu installieren. In vorteilhafter Weise werden durch die Erfindung aber auch Service-Einsätze im laufenden Betrieb deutlich vereinfacht, weil durch die automatische Identifikation des richtigen Steuergeräts durch den Service-Pin vom Feldgerät auch direkt beispielsweise aktuelle Messdaten beziehungsweise Zustandsdaten aus dem Feldgerät gelesen werden können. Darüber hinaus entfällt gegebenenfalls die zeitaufwendige Erstellung von Etiketten auf den Geräten zur Beschreibung der Position, wodurch die Verwechslungsgefahr reduziert wird. Zudem wird die Durchführung der Servicearbeiten erheblich schneller, zuverlässiger und nachvollziehbarer.

### Bezugszeichenliste

- A1: Anlage
- C1, C2, C3: Steuergerät
- E1, E2: Endgerät
- F1, F2, F3: Feldbus
- G1, G2: Feldgerät
- h: Hervorhebung
- i: Identifikationsmeldung
- N: Datennetz
- R1, R2, R3: Raum
- S1 bis S5: Schritt

## Patentansprüche

1. Verfahren zum Ermitteln eines von mehreren Steuergeräten (C1, C2, C3) in einem Datennetzwerk (N) eines Automatisierungssystems durch
- Auslösen einer Aktion eines Feldgeräts (G1, G2) zum Erzeugen eines Ansteuersignals (a) durch eine Benutzerinteraktion,
- Übertragen des Ansteuersignals (a) an das eine der mehreren Steuergeräte (C1, C2, C3) über einen Feldbus (F1, F2, F3) entsprechend einem Feldbusprotokoll,
- Erzeugen einer Identifikationsmeldung (i) entsprechend einem von dem Feldbusprotokoll verschiedenen Netzwerkprotokoll durch das eine der mehreren Steuergeräte (C1, C2, C3) auf der Basis des Ansteuersignals (a), wobei
- die Identifikationsmeldung (i) eine Information über die Identität des einen der mehreren Steuergeräte (C1, C2, C3) beinhaltet,
- Übertragen der Identifikationsmeldung (i) über das Datennetzwerk (N) zu einem Endgerät (E1, E2) und
- Identifizieren des einen der mehreren Steuergeräte (C1, C2, C3) durch das Endgerät (E1, E1) anhand der Identifikationsmeldung (i),
**dadurch gekennzeichnet, dass** die Identifikationsmeldung des Steuergeräts indirekt über das Feldgerät ausgelöst wird, und wobei Identifikationsmeldung unabhängig von einer Spezifikation des Feldbusses ist.

2. Verfahren nach Anspruch 1, wobei der Feldbus (F1, F2, F3) ein KNX-Bus, ein Modbus, ein EIB-Bus, ein EHS-Bus, ein LON-Bus ist oder mit einem drahtlosen Netzwerk realisiert ist, und das Feldbusprotokoll entsprechend spezifiziert ist.

3. Verfahren nach Anspruch 1 oder 2, wobei das Datennetzwerk (N) ein auf dem Internet-Protokoll basierendes Netzwerk ist.

4. Verfahren nach einem der vorhergehenden Ansprüche, wobei die Identifikationsmeldung (i) eine Broadcast-Meldung an alle Teilnehmer des Datennetzwerks (N) ist.

5. Verfahren nach einem der vorhergehenden Ansprüche, wobei das Endgerät (E1, E2) drahtlos mit dem Datennetzwerk (N) verbunden wird.

6. Verfahren nach einem der vorhergehenden Ansprüche, das im Rahmen einer Inbetriebnahme oder einer Servicemaßnahme des Feldgeräts (G1, G2), des einen der mehreren Steuergeräte (C1, C2, C3) oder des gesamten Automatisierungssystems durchgeführt wird.

7. Verfahren nach einem der vorhergehenden Ansprüche, wobei das Identifizieren des einen der mehreren Steuergeräte (C1, C2, C3) ein optisches Kenntlichmachen eines bildlichen Repräsentanten des einen der mehreren Steuergeräte (C1, C2, C3) auf dem Endgerät (E1, E2) umfasst.

8. Verfahren nach einem der vorhergehenden Ansprüche, wobei mit dem Ansteuersignal auch Messdaten oder Zustandsdaten von dem Feldgerät (G1, G2) an das eine der mehreren Steuergeräte (C1, C2, C3) übertragen werden.

9. Automatisierungssystem mit
- mehreren Steuergeräten (C1, C2, C3),
- einem Endgerät (E1, E2),
- einem Datennetzwerk (N), mit dem die mehreren Steuergeräte (C1, C2, C3) und das Endgerät (E1, E2) verbunden sind,
- einem Feldgerät (G1, G2), mit dem ein Ansteuersignal (a) durch Auslösen einer Aktion des Feldgeräts mittels einer Benutzerinteraktion erzeugbar ist,
- einem Feldbus (F1, F2, F3) mit dem Ansteuersignal (a) an eines der mehreren Steuergeräte (C1, C2, C3) entsprechend einem Feldbusprotokoll übertragbar ist, wobei
- durch das eine der mehreren Steuergeräte (C1, C2, C3) eine Identifikationsmeldung (i) entsprechend einem von dem Feldbusprotokoll verschiedenen Netzwerkprotokoll auf der Basis des Ansteuersignals (a) erzeugbar ist,
- die Identifikationsmeldung (i) eine Information über die Identität des einen der mehreren Steuergeräte (C1, C2, C3) beinhaltet,
- die Identifikationsmeldung von dem einen der mehreren Steuergeräte (C1, C2, C3) über das Datennetzwerk (N) zu dem Endgerät (E1, E2) übertragbar ist und
- durch das Endgerät (E1, E2) das eine der mehreren Steuergeräte (C1, C2, C3) anhand der Identifikationsmeldung (i) identifizierbar ist,
**dadurch gekennzeichnet, dass** die Identifikationsmeldung des Steuergeräts indirekt über das Feldgerät auslösbar ist, und wobei Identifikationsmeldung unabhängig von einer Spezifikation des Feldbusses ist.

10. Automatisierungssystem nach Anspruch 9, wobei das eine der mehreren Steuergeräte (C1, C2, C3) das einzige Steuergerät ist, mit dem das Feldgerät (G1, G2) verbunden ist.

11. Automatisierungssystem nach Anspruch 9 oder 10, wobei das Feldgerät (G1, G2) eine Service-Taste oder eine Programmiertaste für die Benutzerinteraktion besitzt, mit der das Auslösen des Ansteuersignals (a) manuell ausführbar ist.

12. Automatisierungssystem nach Anspruch 9 oder 10, wobei das Feldgerät (G1, G2) eine Spracheingabeeinrichtung für die Benutzerinteraktion besitzt, mit der das Auslösen des Ansteuersignals (a) verbal ausführbar ist.

13. Automatisierungssystem nach einem der Ansprüche 9 bis 12, wobei das Endgerät (E1, E2) ein PC, Smartphone, Tablet oder Laptop ist.

## Claims

1. Method for determining one of several control devices (C1, C2, C3) in a data network (N) of an automation system by
- triggering an action of a field device (G1, G2) for generating an actuation signal (a) by means of a user interaction,
- transmitting the actuation signal (a) to the one of several control devices (C1, C2, C3) via a fieldbus (F1, F2, F3) according to a fieldbus protocol,
- generating an identification message (i) according to a network protocol which differs from the fieldbus protocol by means of the one of several control devices (C1, C2, C3) on the basis of the actuation signal (a), wherein
- the identification message (i) contains an item of information relating to the identity of the one of several control devices (C1, C2, C3),
- transmitting the identification message (i) via the data network (N) to a terminal (E1, E2) and
- identifying the one of several control devices (C1, C2, C3) by means of the terminal (E1, E1) on the basis of the identification message (i),
**characterised in that**
the identification message of the control device is triggered indirectly by way of the field device and wherein the identification message is independent of a specification of the fieldbus.

2. Method according to claim 1, wherein the fieldbus (F1, F2, F3) is a KNX bus, a modbus, an EIB bus, an EHS bus, a LON bus or is realised with a wireless network, and the fieldbus protocol is specified accordingly.

3. Method according to claim 1 or 2, wherein the data network (N) is a network based on the internet protocol.

4. Method according to one of the preceding claims, wherein the identification message (i) is a broadcast message to all subscribers of the data network (N).

5. Method according to one of the preceding claims, wherein the terminal (E1, E2) is connected wirelessly to the data network (N).

6. Method according to one of the preceding claims, which is carried out within the scope of a commissioning or a service measure of the field device (G1, G2) of the one of several control devices (C1, C2, C3) or the entire automation system.

7. Method according to one of the preceding claims, wherein the identification of the one of several control devices (C1, C2, C3) comprises a visual acknowledgement of a pictorial representative of the one or more control devices (C1, C2, C3) on the terminal (E1, E2).

8. Method according to one of the preceding claims, wherein measurement data or status data is also transmitted from the field device (G1, G2) to the one of several control devices (C1, C2, C3) using the actuation signal.

9. Automation system having
- several control devices (C1, C2, C3),
- a terminal (E1, E2),
- a data network (N) to which the several control devices (C1, C2, C3) and the terminal (E1, E2) are connected,
- a field device (G1, G2), with which an actuation signal (a) can be generated by triggering an action of the field device by means of a user interaction,
- a fieldbus (F1, F2, F3) with which an actuation signal (a) can be transmitted to one of the several control devices (C1, C2, C3) according to a fieldbus protocol, wherein
- by means of the one of several control devices (C1, C2, C3), an identification message (i) can be generated according to a network protocol, which differs from the fieldbus protocol, on the basis of the actuation signal (a),
- the identification message (i) contains an item of information relating to the identity of the one of several control devices (C1, C2, C3),
- the identification message can be transmitted from the one of several control devices (C1, C2, C3) via the data network (N) to the terminal (E1, E2) and
- by means of the terminal (E1, E2), the one of several control devices (C1, C2, C3) can be identified on the basis of the identification message (i),
**characterised in that**
the identification message of the control device can be triggered indirectly by way of the field device and wherein identification message is independent of a specification of the fieldbus.

10. Automation system according to claim 9, wherein the one of several control devices (C1, C2, C3) is the only control device to which the field device (G1, G2) is connected.

11. Automation system according to claim 9 or 10, wherein the field device (G1, G2) has a service button or a programming button for the user interaction, with which the triggering of the actuation signal (a) can be carried out manually.

12. Automation system according to claim 9 or 10, wherein the field device (G1, G2) has a speech input facility for the user interaction, with which the triggering of the actuation signal (a) can be carried out verbally.

13. Automation system according to one of claims 9 to 12, wherein the terminal (E1, E2) is a PC, smartphone, tablet or laptop.

## Revendications

1. Procédé pour déterminer l'un d'une pluralité de dispositifs de commande (C1, C2, C3) dans un réseau de données (N) d'un système d'automatisation consistant à
- déclencher une action d'un dispositif de terrain (G1, G2) pour générer un signal de commande (a) par une interaction avec l'utilisateur,
- transmettre le signal de commande (a) à l'un de la pluralité de dispositifs de commande (C1, C2, C3) via un bus de terrain (F1, F2, F3) conformément à un protocole de bus de terrain,
- générer un message d'identification (i) selon un protocole de réseau différent du protocole de bus de terrain par l'un de la pluralité de dispositifs de commande (C1, C2, C3) sur la base du signal de commande (a), dans lequel
- le message d'identification (i) comprend une information concernant l'identité de l'un de la pluralité de dispositifs de commande (C1, C2, C3),
- transmettre le message d'identification (i) à un terminal (E1, E2) via le réseau de données (N), et
- identifier l'un de la pluralité de dispositifs de commande (C1, C2, C3) par le terminal (E1, E1) à l'aide du message d'identification (i),
**caractérisé en ce que** le message d'identification du dispositif de commande est déclenché indirectement par l'intermédiaire du dispositif de terrain,
le message d'identification étant indépendant d'une spécification du bus de terrain.

2. Procédé selon la revendication 1, dans lequel le bus de terrain (F1, F2, F3) est un bus KNX, un bus Modbus, un bus EIB, un bus EHS, un bus LON ou est réalisé avec un réseau sans fil, et le protocole de bus de terrain est spécifié en conséquence.

3. Procédé selon la revendication 1 ou 2, dans lequel le réseau de données (N) est un réseau basé sur le protocole Internet.

4. Procédé selon l'une des revendications précédentes, dans lequel le message d'identification (i) est un message de diffusion à tous les abonnés du réseau de données (N).

5. Procédé selon l'une des revendications précédentes, dans lequel le terminal (E1, E2) est connecté sans fil au réseau de données (N).

6. Procédé selon l'une des revendications précédentes, qui est mis en œuvre dans le cadre d'une mise en service ou d'une opération de maintenance du dispositif de terrain (G1, G2), de l'un de la pluralité de dispositifs de commande (C1, C2, C3) ou de l'ensemble du système d'automatisation.

7. Procédé selon l'une quelconque des revendications précédentes, dans lequel l'identification de l'un de la pluralité de dispositifs de commande (C1, C2, C3) comprend une reconnaissance optique d'une représentation visuelle de l'un de la pluralité de dispositifs de commande (C1, C2, C3) sur le terminal (E1, E2).

8. Procédé selon l'une des revendications précédentes, dans lequel, avec le signal de commande, des données de mesure ou des données d'état sont également transmises par le dispositif de terrain (G1, G2) à l'un de la pluralité de dispositifs de commande (C1, C2, C3).

9. Système d'automatisation présentant
- plusieurs dispositifs de commande (C1, C2, C3),
- un terminal (E1, E2),
- un réseau de données (N) auquel sont reliés la pluralité de dispositifs de commande (C1, C2, C3) et le terminal (E1, E2),
- un dispositif de terrain (G1, G2), avec lequel un signal de commande (a) peut être généré par déclenchement d'une action du dispositif de terrain au moyen d'une interaction de l'utilisateur,
- un bus de terrain (F1, F2, F3) avec lequel le signal de commande (a) peut être transmis à l'un de la pluralité de dispositifs de commande (C1, C2, C3) selon un protocole de bus de terrain, dans lequel
- par l'un de la pluralité de dispositifs de commande (C1, C2, C3), un message d'identification (i) peut être généré conformément à un protocole de réseau différent du protocole de bus de terrain sur la base du signal de commande (a),
- le message d'identification (i) comprend une information concernant l'identité de l'un de la pluralité de dispositifs de commande (C1, C2, C3),
- le message d'identification peut être transmis de l'un de la pluralité de dispositifs de commande (C1, C2, C3) au terminal (E1, E2) via le réseau de données (N) et
- par le terminal (E1, E2), l'un de la pluralité de dispositifs de commande (C1, C2, C3) est identifiable à l'aide du message d'identification (i),
**caractérisé en ce que** le message d'identification du dispositif de commande peut être déclenché indirectement par l'intermédiaire du dispositif de terrain, et
dans lequel le message d'identification est indépendant d'une spécification du bus de terrain.

10. Système d'automatisation selon la revendication 9, dans lequel l'un de la pluralité de dispositifs de commande (C1, C2, C3) est le seul dispositif de commande auquel le dispositif de terrain (G1, G2) est connecté.

11. Système d'automatisation selon la revendication 9 ou 10, dans lequel le dispositif de terrain (G1, G2) possède une touche de service ou une touche de programmation pour l'interaction avec l'utilisateur, avec laquelle le déclenchement du signal de commande (a) peut être exécuté manuellement.

12. Système d'automatisation selon la revendication 9 ou 10, dans lequel le dispositif de terrain (G1, G2) possède un dispositif d'entrée vocale pour l'interaction avec l'utilisateur, avec lequel le déclenchement du signal de commande (a) peut être exécuté verbalement.

13. Système d'automatisation selon l'une des revendications 9 à 12, dans lequel le terminal (E1, E2) est un PC, un smartphone, une tablette ou un ordinateur portable.
